(19) **Europäisches Patentamt / European Patent Office / Office européen des brevets**

(11) **EP 4 556 264 A1**

(12) # EUROPEAN PATENT APPLICATION

(43) Date of publication:
**21.05.2025 Bulletin 2025/21**

(21) Application number: **23210070.1**

(22) Date of filing: **15.11.2023**

(51) International Patent Classification (IPC):
**B60G 11/27** $^{(2006.01)}$ **B60G 17/017** $^{(2006.01)}$
**B60G 17/052** $^{(2006.01)}$

(52) Cooperative Patent Classification (CPC):
**B60G 11/27; B60G 17/017; B60G 17/052;**
B60G 2202/152; B60G 2300/042;
B60G 2400/51222; B60G 2400/61; B60G 2500/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• **Fagergren, Mats**
**442 35 KUNGÄLV (SE)**

• **Rundqvist, Carl-Johan**
**441 43 ALINGSÅS (SE)**
• **OSCARSSON, Christian**
**44447 Stenungsund (SE)**
• **Löfwenberg, Richard**
**417 21 GÖTEBORG (SE)**
• **Holmen, Charlotte**
**42349 GOTHENBURG (SE)**

(74) Representative: **Lavoix**
**2, place d'Estienne d'Orves**
**75441 Paris Cedex 09 (FR)**

Remarks:
Amended claims in accordance with Rule 137(2) EPC.

(54) **TRAILER LOADING METHOD**

(57) Method (1000) for loading a trailer comprising: providing (1100) a trailer having at least two axles connected to a trailer chassis by independently adjustable suspension systems, the at least two axles including a frontmost axle and a rearmost axle, the trailer further comprising a kingpin configured to be removably connected to a fifth wheel of a tractor; a first loading step (1400) comprising loading the trailer until a threshold load is reached on the kingpin; and then a second loading step (1500) comprising: loading (1510) the trailer further; and adjusting (1520) a suspension parameter of the rearmost axle to ensure that the load on the kingpin remains at or below the threshold load.

1000

1100

1200

1300

1400

**Fig.3**

1500
1510 | 1520 | 1530

2000

2100
2110 | 2120

EP 4 556 264 A1

## Description

### Technical Field

This disclosure pertains to the methods for loading a trailer.

### Background Art

Various regulations do exist throughout the world which govern the maximum allowable load for a truck or a trailer. In some countries, a limit of 10 tons per axle, or 11.5 tons per driven axle may be set. In some countries, exceeding this limit by up to 30% is allowed when the truck/trailer is intended to be moving at a speed that is less than a given threshold (e.g., 30 kph). Other regulations may exist, but they tend to always include a maximum load per axle, as this may be a relevant factor for the safety of the vehicle and the longevity of the roads.

Although electric vehicles and in particular electric tractors may be heavier than internal combustion engine vehicles, the same load limit may apply to these vehicles. Hence, the pay load that can be loaded in the trailers of electric vehicles may need to be lower than for internal combustion engine vehicles, thereby reducing the economic efficiency of a transporting operation.

One way to increase the pay load of trailers is to add an axle so that the load is spread amongst a higher number of axles. This solution may be expensive to produce and to service, and may increase the length of the trailer, reducing their agility. An example is shown in document US 5,025,877 A, where the payload can be increased on demand by deploying an additional axle for supporting the load of the trailer. Beyond the cost, this technical solution may also be questionable from a safety perspective. Also, this solution is not adapted for semi-trailers, as the additional axle is positioned in this document at the location where the rear wheels of a tractor would normally be located.

There is therefore a need for a system that enables an increased payload for semi-trailers within the limits of the law and without excessive cost.

### Summary

This disclosure improves the situation.

The disclosure relates to a method for loading a trailer comprising: providing a trailer having at least two axles connected to a trailer chassis by independently adjustable suspension systems, the at least two axles including a frontmost axle and a rearmost axle, the trailer further comprising a king pin configured to be removably connected to a fifth wheel of a tractor; a first loading step comprising loading the trailer until a threshold load is reached on the kingpin; and then a second loading step comprising: loading the trailer further; and adjusting a suspension parameter of the rearmost axle to ensure that the load on the kingpin remains at or below the threshold load.

As will be apparent further below, by adjusting the suspension settings of the rearmost axle, part of the load on the kingpin can be relieved and the trailer may then be further loaded, beyond the payload that would be admissible when all the axles have the same suspension settings. Also, this technical solution is reliable and non-expensive.

The adjustment of the suspension parameter may be performed while the trailer is being loaded, or incrementally before loading a further article or a further amount of material in the trailer.

The adjustment of the suspension parameter may be carried out manually by an operator or may be automated.

The threshold load may be a predetermined legal limit for a kingpin load or may be calculated based on other regulations or physical parameters, e.g., a maximum load per axle.

The expression "remains at or below the threshold load" should be understood as the intention for the control of the suspension parameter to keep the load on the king pin at a maximum value that corresponds to the threshold load. A tolerance of about 10% may be necessary, as there may not exist a specifically precise suspension parameter that is such that, considering the load in the trailer, the load on the kingpin would remain exactly equal to the threshold load.

Each of the following aspects of the invention may be combined with any of the other aspects unless explicitly excluded or obviously incompatible.

In an aspect, the at least two axles comprise three axles, including the frontmost axle, the rearmost axle and an intermediate axle, the method further comprising, during the second loading step, adjusting a suspension parameter of the intermediate axle to ensure that the load on the kingpin remains at or below the threshold load.

Optionally, the trailer may contain more than three axles, with several intermediate axles. The rearmost and optionally some or all of the intermediate axles may see their suspension settings adjusted while loading the truck.

In another aspect, the suspension parameter(s) are adjusted continuously while the trailer is being loaded. For example, the suspension parameter(s) may be adjusted in a linear or quadratic progression as a function of the additional load being loaded in the trailer.

In another aspect, the suspension parameter(s) are adjusted sequentially before loading one or more loads in the trailer. For example, before loading a load of a predetermined and/or measured weight, the suspension parameter(s) may be adjusted so that afterthat load has been loaded, the load on the kingpin remains equal or below a threshold limit.

In another aspect, the method comprises calculating the threshold load based on parameters of a tractor connectable to the trailer, the parameters including an admissible load on the axles of the tractor, the wheelbase of the tractor and the longitudinal position of the fifth wheel of the tractor relative to the axles. Alternatively, the threshold load can be predetermined by calculation, by standards or other regulations, or by physical requirements (e.g., mechanical strength, etc.).

In another aspect, adjusting the suspension parameter(s) includes reducing the load on the rearmost axle and optionally on the intermediate axle to reduce a virtual wheelbase. The virtual wheelbase of a trailer may be defined as the distance from the kingpin to the centroid of the rear axles. Relieving the load from the rearmost axle thus moves the centroid forward (as the frontmost and optional intermediate axle bear more weight), thus reducing the wheelbase. Reducing the wheelbase also reduces the weight on the kingpin. Without being bound by theory, there are at least two mechanism which enable the relief of the load from the kingpin: the frontmost axle and optional intermediate axle bear more load and hence, the kingpin is relieved; and also, by moving the centroid forward, the weight of the trailer at its rearmost end is more cantilevered and tends to create a torque around the centroid that tends to pull the kingpin upwards, thereby relieving part of the load thereon (the smaller the wheelbase, the greater the pull operated by the cantilevered weight at the rear of the trailer).

In another aspect, the suspension systems include air bags and the suspension parameter(s) is/are an air pressure in the respective air bags. Alternatively, other parameters of other suspensions may be used, e.g., electro-mechanical suspensions or hydraulic suspensions.

In another aspect, the mass of air in the air bags is regulated so as to set the ride height at a predetermined level and/or inclination. As explained below, the transfer of load from one axle to another axle may lead to an inclination of the trailer. To set the ride height back to a desired level and/or inclination, it may be advantageous to adjust the mass of air in the frontmost, and/or the intermediate, and/or the rearmost air bags.

In another aspect, the trailer comprises load measurement devices configured to assess or calculate the load on the kingpin and on each of the at least two axles, and the trailer further comprises a control unit which automatically performs the adjustment of the suspension parameter(s) based on the load measured or calculated by the load measurement devices. Weighing devices may be incorporated into the trailer and/or in the kingpin and/or in the wheel axles and/or in the landing legs. Hence, whether the trailer is already connected to the tractor or is supported by its landing legs when being loaded, it is possible to assess the effective load borne by the axles and by the kingpin.

Optionally, a control unit of the trailer and/or of the truck can be informed of these measurements.

Optionally, a user may be informed of these load data, for instance with the aim of manually operating the suspension parameter(s).

In another aspect, the suspension parameter(s) is/are adjusted so as to increase the load on the frontmost axle up to a predetermined threshold. This enables to obtain the shortest wheelbase possible without exceeding the legal limits. The legal limit may be up to 10 tons for an idle axle, up to 11.5 tons for a driven axle and these values may be increased by 30% if/when the vehicle moves below a given speed limit. The load on the frontmost axle may be increased progressively while the load on the kingpin is kept substantially constant.

In another aspect, the method further comprises: before or after loading the trailer, connecting the trailer to a tractor, the tractor having at least one driving axle; moving the tractor and the trailer, and adjusting suspension parameters to increase the load on the driving axle(s) of the tractor and/or on a driving axle of the trailer, while ensuring that the load on the kingpin remains equal or less than the threshold load. This enables to improve the traction of the trailer and is especially beneficial as it uses the extra payload enabled by the general method disclosed above, to further enhance the traction by deporting the extra payload on the driving axle for better traction purposes.

In another aspect, the method further comprises: before or after loading the trailer, connecting the trailer to a tractor; driving the tractor and the trailer; and adjusting suspension parameters to reduce a virtual wheelbase when the speed of the tractor and trailer is below a given threshold, while ensuring that the load on the kingpin remains equal or less than the threshold load. This operation enables to compensate the loss of agility of the trailer incurred by the extra weight that can be loaded thanks to the general method discussed above.

The present disclosure also relates to a trailer comprising: a trailer chassis; at least two axles connected to the trailer chassis by independently adjustable suspension systems, the at least two axles includ ing a frontmost axle and a rearmost axle; a kingpin configured to be removably connected to a fifth wheel of a tractor; and a control unit configured to adjust a suspension parameter of the rearmost axle during loading of the trailer to ensure that the load on the kingpin remains at or below the threshold load.

The control unit may be configured to perform anyone of the methods disclosed above.

Alternatively, the methods may be performed manually on the trailer, for instance by decrementing the air pressure while the trailer is being loaded.

In another aspect, the trailer further comprises load measurement devices that assess or calculate the load on the kingpin and on each axle of the trailer, the control unit automatically performing the adjustment of the suspension parameter(s) based on the load measured or calculated by the load measurement devices.

In another aspect, at least one of the at least two axles is an electrically driven axle. This may further increase the pay load as the legally allowed load on a driven axle may be higher than the allowed load on an idle axle. In another aspect, the rearmost axle is idle. The various aspects discussed above are beneficial irrespective of the nature of the engine that drive the tractor and/or the trailer, but the method may have particular benefits for electrically driven tractors and/or trailer.

The invention also relates to a truck assembly of a tractor and a trailer according to the embodiments disclosed above.

## Brief Description of Drawings

Other features, details and advantages will be shown in the following detailed description and on the figures, on which:

FIG. 1 is a schematic view of a truck.

FIG. 2 shows a trailer.

FIG. 3 shows a method.

FIG. 4 shows a graph.

## Description of Embodiments

The figures depict the elements of this disclosure in a schematic way. The disclosure can naturally be adapted for any size of truck or trailer combination, and for trucks or trailers intended for any purpose.

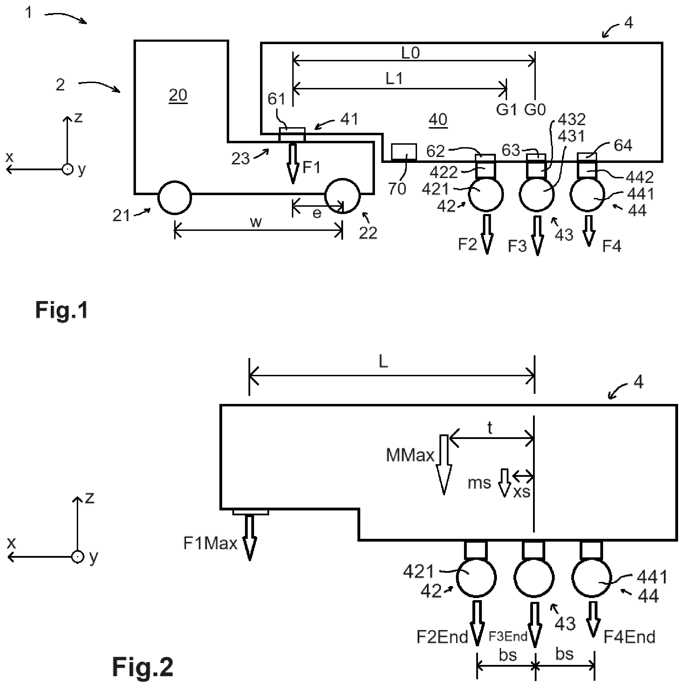

Figure 1 shows a truck assembly 1 containing a tractor 2 and a trailer 4. The direction x is a longitudinal direction, the direction y is a transversal direction and the direction z is a vertical direction. The tractor 2 may be driven by an internal combustion engine or by an electric motor, or any other engine technology. The tractor 2 is here shown as having a chassis 20 supported by two axles 21, 22. The skilled person would understand that the teachings of the present disclosure may be adapted to tractors having three or more axles. At least one of the axles 21, 22 is a driving axle.

In the present disclosure, an "axle" is meant to depict a set of wheels (one or more pairs) comprising rims and tires aligned at a longitudinal location.

The distance between the two axles 21, 22 of the tractor 2 is the wheelbase w.

The tractor also comprises a fifth wheel 23 intended to support and connect to the trailer 4. The fifth wheel 23 is located at a distance e from the rearmost axle 22 of the tractor 2.

The trailer 4 is removably connected to the tractor 2. To that end, the trailer 4 comprises a kingpin 41 connectable to the fifth wheel 23.

The trailer further comprises a chassis 40 intended to receive the content to be transported. The content can be any combination of solid articles, particulate material and/or liquid.

The trailer 4 further comprises at least two axles 42, 43, 44. In this example, the at least two axles comprise a frontmost axle 42, an intermediate axle 43 and a rearmost axle 44. Each axle comprises one set of wheels 421, 431, 441. The axles 42, 43, 44 are connected to the chassis 40 by means of suspension systems 422, 432, 442. In this disclosure, the suspension systems 422, 432, 442 are adjustable independently, i.e., their spring rate and/or damping and/or suspension travel may be set differently and/or may be dynamically independently controlled. The parameter of the suspension systems which can be adjusted can be a suspension stiffness, noted k2, k3, k4 respectively. In some examples, the suspension is hydraulic or electro-mechanical. In some examples, the suspension contains an air bag, the pressure of which can be independently selected for each of the suspension systems (in such a case, the regulated parameter is a pressure, noted p2, p3, p4). A relationship exists between pi and ki: pi=D*ki*(H/2A) where pi is the pressure of airbag of axle i, ki is the stiffness of the suspension i, D is a geometrical constant, H and A are respectively the height and area of the airbag.

When suspensions comprise air bags as noted above, $F = p * A$, where F is the load, p the pressure and A the area of the air bag. As the pressure is changed in the air bag, there is a conservation of the quantity pV/m: $$pa * \frac{Va}{ma} = pb * \frac{Vb}{mb},$$ where a and b refer to two distinct loads on the same axis (e.g. before and after a transfer of load by action on the suspension parameters); pa and pb are the pressure in the bellow for these two loads; Va and Vb are the volume of air in the bellows; ma and mb are the mass of air in the bellows. Since the area A is not affected by either load or pressure, it follows that:

$$\frac{Fa*ha}{ma} = \frac{Fb*hb}{mb}$$

where Fa and Fb are the load before and after a changed of load; ha and hb are the height of the air bags; and ma and mb are the mass of air in the bellows.

This last equation indicates that when the load is changed on an axle, if it is not accompanied by a change of mass of air, the height of the bellow will change (in inverse proportion to the change of load). This may affect the level and/or orientation of the trailer. A small change of level or orientation of the trailer may be acceptable. It may be advantageous, though, to act on the air mass in the airbag to compensate for the change of height of the bellow: if we desire for instance for ha to equate hb, when the load increases on an axle (Fb>Fa), it is needed to increase the mass of air in the corresponding bellow with the same proportion (mb>ma).

The load applied or borne by the kingpin (or by the fifth wheel) is noted F1. The load applied or borne by the axles 42, 43, 44 is noted F2, F3 and F4.

A virtual wheelbase of the trailer4 may be defined as the distance from the kingpin 41 to a centroid of the rear axles 42, 43, 44. In a default configuration, the settings of all the axles 42, 43, 44 are the same: the load is evenly spread between the axles and the centroid G0 is located at about the same position as the intermediate axle 43. The virtual wheelbase is noted L0.

As explained below, the method of the present disclosure comprises changing the settings of the suspension 442 of the rearmost axle 44. For example, the air pressure in the suspension 442 may be reduced to relieve the rear axle 44 from part of its load. Figure 1 shows this configuration where a load F4 that is smallerthan the loads F2 or F3. Relieving the load from the rearmost axle 44 moves the centroid forward, to the position G1 (as the frontmost 42 and optional intermediate axle 43 bear more weight), thus reducing the virtual wheelbase to L1, lower than L0.

The trailer 4 may contain load measurement devices 61, 62, 63, 64 (e.g., embedded load cells or external weighing mechanism lying on the floor of the loading dock). The load measurement devices may be connected to a control unit 70 which may be used to receive signals from the load measurement devices and which may control the suspension settings of the trailer 4.

The control unit 70 may be part of the trailer, or of the tractor, or may be a remote controller which is wirelessly connected to the load measurement devices 61, 62, 63, 64.

Legal regulations or technical constraints may limit the load per axle and may prescribe F2Max, F3Max, F4Max, for instance as being 10 tons, or 11.5 tons when the respective axle 42, 43, 44 is a driving axle.

Similarly, regulations or technical constraints may limit the load per axle of the tractor to F21Max, F22Max, e.g., 10 tons.

Similarly, regulations or technical constraints may limit the load on the fifth wheel F1Max.

Alternatively, the limit F1 Max may be calculated from regulations or constraints on the tractor axles 21,22 as follows:

$$F1Max = Min\left\{(GVW - F0 - R0); (F21Max - F0)*\frac{w}{e}; (F22Max - R0)*\frac{w}{w-e}\right\}$$

Where F1Max is the load limit on the fifth wheel (or on the kingpin); GVW is the gross tractor weight; F0 and R0 are the unladen load on the axles 21, 22; F21Max and F22Max are the admissible loads on the axles 21, 22; e is the distance between the fifth wheel and the rear axle 22; w is the wheelbase between the axles 21, 22.

Figure 2 illustrates some parameters on the trailer 4 that may help calculate the maximum payload Mmax of the trailer for a given geometry of trailer. By simplification, this figure shows equidistant axles 42, 43, 44, distant by a distance bs. The maximum load that can be loaded in the trailer can be calculated as follows:

$$MMax = Min\left\{\begin{array}{c}(GCW - F0 - R0 - ms); \\ \frac{1}{t+bs}*\left(bs*(2*F2End + F3End) - ms*(xs+bs)\right) + F1Max*(L+bs))\end{array}\right\}$$

Where MMax is the maximum load on the trailer; GCW is the gross combination weight; F0 and R0 are the unladen load on the axles 21, 22; ms is the unladen trailer weight; bs is the distance between two adjacent axles; xs is the distance between the centroid of the axles and the center of mass of the unladen trailer; t is a distance between the center of mass of the loaded trailer and the centroid of the axles; L is a default virtual wheelbase; F2End and F3End are the loads on the axles 42, 43 (e.g., a predetermined value of 9 or 10 tons) when the trailer is fully loaded.

The load on the rearmost axle 44 can then be calculated:

$$F4End = MMax + ms - F1Max - F2End - F3End$$

Where F4End is the final load on the axle 44 when the trailer is fully loaded; M max is the maximum load on the trailer; ms is the unladen trailer weight; F1Max is the load limit on the fifth wheel (or on the kingpin); F2End and F3End are the loads on the axles 42, 43 (e.g., a predetermined value of 9 or 10 tons) when the trailer is fully loaded.

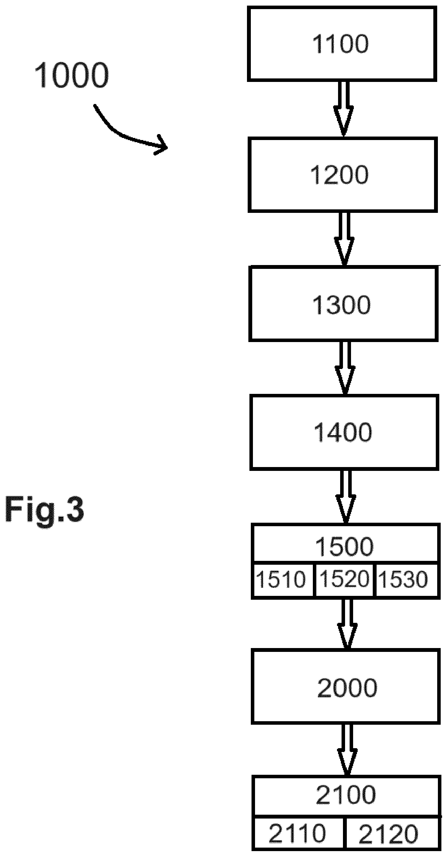

Figure 3 shows a method 1000 for loading a trailer.

In step 1100, a trailer is provided. The trailer may be constituted as discussed above in combination with figure 1: the trailer may have at least two axles 42, 43, 44 connected to a trailer chassis 40 by independently adjustable suspension systems 422, 432, 442, the at least two axles 42, 43, 44 including a frontmost axle 42 and a rearmost axle 44, the trailer 4 further comprising a kingpin 41 configured to be removably connected to a fifth wheel 23 of a tractor 2.

Optional step 1200 may consist in providing a tractor. The tractor may be as discussed above, i.e., having a chassis 20, axles 21, 22 and a fifth wheel 23.

Optional step 1300 consists in calculating F1Max, MMAx and/or F4End as noted above. These calculations may include properties of the trailer and of the tractor. Alternatively, these values may be predetermined or may originate from other technical or legal sources.

Step 1400 comprises a first loading phase. During this loading phase, the load F1 on the kingpin remains below F1Max.

Step 1500 comprises a second loading phase that is only triggered once the load F1 on the kingpin reaches F1Max or approaches 90% of F1Max.

It should be understood that in some cases, the trailer may not need to be loaded beyond the first phase. The trailer that is used may nevertheless contain a control unit and/or load cells for allowing the second loading phase to be carried out if necessary.

During the second phase 1500, additional material is loaded in/on the trailer 1510.

Simultaneously and/or before or after each additional material being loaded, the suspension parameter k4 of the rearmost suspension system 442 is adjusted at step 1520, continuously or incrementally/sequentially. As noted above, the adjustment of the suspension stiffness k4 may be made by altering the pressure p4 in the air bag of the suspension system 442.

Similarly, a step 1530 of adjusting the suspension parameter k3 of the intermediate axle 43 may be performed.

Both parameters k3 and k4 can be adjusted simultaneously. Alternatively, the parameter k4 can be adjusted first and the parameter k3 can be altered only if needed.

The adjustment of the settings is such that the load on the kingpin F1 remains below or equal to the maximum allowable load F1Max. The estimation of the real-time F1 can be made by load measurement devices and/or the calculations above and/or empirically and/or by computer-assisted simulations. The predetermination of the parameters k3, k4 may need to take into account the load distribution in the trailer.

The loading 1510 and the adjustment of the suspension settings 1520, 1530 may continue until one of the end criteria is reached: for example, if Mmax is reached or if the preset/precalculated end load F2End, F3End, or F4End is reached, the second phase of loading stops.

As explained above, when the suspension comprises air bags, it may be desired to maintain the trailer at a predetermined level and/or at a predetermined inclination. Hence, simultaneously of after having adjusted the suspension parameters k3, k4, it may be advantageous to adjust the mass of air in one or more of the bellows so that the height of one or more of the bellows is such that the desired level or inclination is obtained.

The trailer 4 may then be connected to the tractor 2 at step 2000. Alternatively, the connection to the tractor 2 may have happened before loading the trailer 4 (hence between step 1200 and step 1400).

Step 2100 comprises driving the tractor and trailer assembly.

The control unit 70 may be configured to automatically modify the suspension settings while driving or to enable a manual operator to further modify the suspension settings while driving. For instance, step 2110 can foresee to adjust the suspension parameters of the suspension systems (on one or more of the axles 42, 43, 44) to increase the load on the driving axle(s) of the tractor and/or on a driving axle of the trailer. This is done while obviously ensuring that the load F1 on the kingpin 41 remains equal or less than the threshold load F 1 Max. Also, all other technical or legal constraints are respected. This may be helpful to improve traction when the truck moves uphill and/or under deteriorated conditions (snow, sand, etc.). For instance, F1 can be lowered as low as possible under snow.

In some examples, the increase of load on driven axles is made conditionally to the truck moving below a given speed. For instance, in some countries, below 30 kph, the axles can bear 30% more load than at higher speed. Under these circumstances, a new value for F1Max can be calculated and a new value for the suspension settings may be consequently set.

Optional step 2120 comprises adjusting the suspension parameter on one or more of the axles 42, 43, 44 during driving for improving the agility of the trailer, for instance by red ucing further the virtual wheelbase L. This is done while ensuring to maintain F1 below F1Max and while respecting other technical or legal constraints if necessary.

Although the present disclosure focuses on a loading method, it is to be noted that the teachings of the present disclosure may also apply during unloading the trailer: a first phase of unloading while adjusting suspension parameter may be carried out, and then, once the weight on the kingpin becomes below F1Maxas all the suspension settings being identical, a second phase of unloading may then be performed.

In some examples, the control unit 70 may contain a record with various legal ortechnical constraints and may adjust the suspension settings accordingly. For example, the control unit 70 may integrate or may be connected to a GPS system (e.g., the onboard GPS of the tractor) and may adjust the suspension settings based on the actual location of the truck. For instance, if the truck enters a geographic area that allows more load on a driving axle, the suspension settings may be adjusted accordingly to improve the traction, within the boundaries of other technical or legal constraints, for instance on the kingpin.

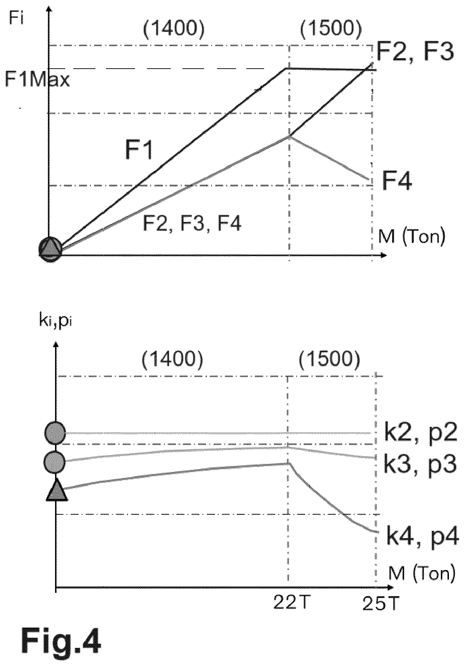

Figure 4 shows an example of a loading operation controlled according to one method of the present disclosure.

The horizontal axis represents the amount of material that is being loaded in/on the trailer. It can be expressed as tons.

The top graph shows the load F1, F2, F3, F4 as a function of the tons loaded.

The bottom graph shows how the suspension parameters are controlled to enable this process.

In a first loading phase (1400), the trailer is loaded and the load F1 increases progressively. The loads F2 to F4 also increase proportionally to F1. Once F1 reaches F1Max, the settings of the suspensions are changed to maintain F1 at or below F1Maxwhile the additional load is borne by the axles 42 and 43.

Without the present method, the loading of the trailer would stop at the end of the first phase 1400. The control of the suspension parameters enablesto proceed further with a second loading phase 1500. While phase 1400 stops at about 22 tons, phase 1500 enables to reach a total of 25 tons.

One can see on the top graph that the weight relieved from the rearmost axle 44 is more than compensated by the additional weight which can be carried by the frontmost and intermediate axles 42, 43. This is possible even though the weight carried by the fifth wheel remains at or under the predetermined limit F1Max.

One can see on the bottom graph that the relief on the rearmost axle 44 is obtained by reducing the stiffness. The evolution of the stiffness may be exponential, linear or quadratic. Also, the intermediate axle 43 is controlled to reduce the stiffness. As shown in this example, the reduction of stiffness k4 may be 3 to 10 times greater than the reduction of stiffness k3.

The slight increase of stiffness during phase 1400 can be controlled or can be passively induced by the additional weight applied on each axle.

**Reference Signs List**

1: Truck assembly
2: tractor
20: tractor chassis
21, 22: tractor axles
23: fifth wheel
4: trailer
40: trailer chassis
41: kingpin
42, 43, 44: trailer axles
421, 431, 441: wheel sets
422, 432, 442: suspension systems
61, 62, 63, 64: load measurement devices
F1, F2, F3, F4: load supported by the kingpin 41 and the axles 42, 43, 44
G0, G1: axles centroid
k2, k3, k4: stiffness of the suspension systems of axles 42, 43, 44
p2, p3, p4: pressure in the air bags of the suspension systems of axles 42, 43, 44
L0, L1: virtual wheelbase
w: tractor wheelbase

**Claims**

1. Method (1000) for loading a trailer (4) comprising:

   providing (1100) a trailer (4) having at least two axles (42, 43, 44) connected to a trailer chassis (40) by independently adjustable suspension systems (422, 432, 442), the at least two axles (42, 43, 44) including a frontmost axle (42) and a rearmost axle (44), the trailer (4) further comprising a kingpin (41) configured to be removably connected to a fifth wheel (23) of a tractor (2);
   a first loading step (1400) comprising loading the trailer (4) until a threshold load (F1Max) is reached on the kingpin (41); and then
   a second loading step (1500) comprising:

   loading (1510) the trailer further; and
   adjusting (1520) a suspension parameter (k4) of the rearmost axle (44) to ensure that the load (F1) on the kingpin (23) remains at or below the threshold load (F1Max).

2. Method (1000) according to claim 1, wherein the at least two axles (42, 43, 44) comprise three axles (42, 43, 44), including the frontmost axle (42), the rearmost axle (44) and an intermediate axle (43), the method further comprising, during the second loading step (1500), adjusting (1530) a suspension parameter (k3) of the intermediate axle (43) to ensure that the load (F1) on the kingpin remains at or below the threshold load (F1Max).

3. Method (1000) according to claim 1 or 2 wherein the suspension parameter(s) (k3, k4) are adjusted continuously while the trailer (4) is being loaded.

4. Method (1000) according to claim 1 or 2 wherein the suspension parameter(s) (k3, k4) are adjusted sequentially before loading one or more loads in the trailer (4).

5. Method (1000) according to any of the preceding claims, further comprising calculating (1300) the threshold load (F1Max) based on parameters of a tractor (2) connectable to the trailer(4), the parameters including an admissible load (F21Max, F22Max) on the axles (21, 22) of the tractor (2), the wheelbase (W) of the tractor (2) and the longitudinal position of the fifth wheel (23) of the tractor (2) relative to the axles (21, 22).

6. Method (1000) according to any of the preceding claims, wherein adjusting (1520, 1530) the suspension parameter(s) (k3, k4) includes reducing the load (F3, F4) on the rearmost axle (44) and optionally on the intermediate axle (43) to reduce a virtual wheelbase (L).

7. Method (1000) according to any of the preceding claims, wherein the suspension systems (422, 432, 442) include air bags and the suspension parameter(s) (k3, k4) is/are an air pressure (p3, p4) in the respective air bags.

8. Method (1000) according to any of the preceding claims, wherein the mass of air in each airbag is regulated so as to set the ride height at a predetermined level and/or inclination.

9. Method (1000) according to any of the preceding claims, wherein the trailer (4) comprises load measurement devices (61, 62, 63, 64) configured to assess or calculate the load (F1, F2, F3, F4) on the kingpin (41) and on each of the at least two axles (42, 43, 44), and the trailer (4) further comprises a control unit (70) which automatically performs the adjustment of the suspension parameter(s) (k3, k4) based on the load (F1, F2, F3, F4) measured or calculated by the load measurement devices (61, 62, 63, 64).

10. Method (1000) according to any of the preceding claims, wherein the suspension parameter(s) (k3, k4) is/are adjusted so as to increase the load (F2) on the frontmost axle (42) up to a predetermined threshold (F2Max).

11. Method (1000) according to any of the preceding claims, further comprising:

    before or after loading the trailer, connecting (2000) the trailer (4) to a tractor (2), the tractor (2) having at least one driving axle (22);
    moving (2100) the tractor (2) and the trailer (4); and
    adjusting (2110) suspension parameters to increase the load (F22, F2, F3) on the driving axle(s) (22) of the tractor (2) and/or on a driving axle (42) of the trailer (4), while ensuring that the load (F1) on the kingpin (41) remains equal or less than the threshold load (F1Max).

12. Method (1000) according to any of the preceding claims, further comprising:

before or after loading the trailer, connecting (2000) the trailer to a tractor;
driving (2100) the tractor (2) and the trailer (4); and
adjusting (2120) suspension parameters to reduce a virtual wheelbase (L) when the speed of the tractor (2) and trailer (4) is below a given threshold, while ensuring that the load (F1) on the kingpin (41) remains equal or less than the threshold load (F1Max).

13. Trailer (4) comprising:

a trailer chassis (40);
at least two axles (42, 43, 44) connected to the trailer chassis (40) by independently adjustable suspension systems (422, 432, 442), the at least two axles (42, 43, 44) including a frontmost axle (42) and a rearmost axle (44);
a kingpin (41) configured to be removably connected to a fifth wheel (23) of a tractor (2); and
a control unit (70) configured to adjust a suspension parameter (k3, k4) of the rearmost axle (44) during loading of the trailer (4) to ensure that the load (F1) on the kingpin (23) remains at or below the threshold load (F1Max).

14. Trailer (4) according to claim 13, further comprising load measurement devices (61, 62, 63, 64) that assess or calculate the load (F1, F2, F3, F4) on the kingpin (41) and on each axle (42, 43, 44) of the trailer (4), the control unit (70) automatically performing the adjustment of the suspension parameter(s) (k3, k4) based on the load (F1, F2, F3, F4) measured or calculated by the load measurement devices (61, 62, 63, 64).

15. Trailer (4) according to claim 13 or 14, wherein at least one of the at least two axles (42, 43, 44) is an electrically driven axle (42), the rearmost axle (44) being preferably idle.

16. Truck assembly (1) including a tractor (2) and a trailer (4) according to any of claims 13 to 15, connected to the tractor (2).

**Amended claims in accordance with Rule 137(2) EPC.**

1. Method (1000) for loading a trailer (4) comprising:

providing (1100) a trailer (4) having at least two axles (42, 43, 44) connected to a trailer chassis (40) by independently adjustable suspension systems (422, 432, 442), the at least two axles (42, 43, 44) including a frontmost axle (42) and a rearmost axle (44), the trailer (4) further comprising a kingpin (41) configured to be removably connected to a fifth wheel (23) of a tractor (2);
a first loading step (1400) comprising loading the trailer (4) until a threshold load (F1Max) is reached on the kingpin (41); and then
a second loading step (1500) comprising:

loading (1510) the trailer further; and
adjusting (1520) a suspension parameter (k4) of the rearmost axle (44) to ensure that the load (F1) on the kingpin (23) remains at or below the threshold load (F1Max).

2. Method (1000) according to claim 1, wherein the at least two axles (42, 43, 44) comprise three axles (42, 43, 44), including the frontmost axle (42), the rearmost axle (44) and an intermediate axle (43), the method further comprising, during the second loading step (1500), adjusting (1530) a suspension parameter (k3) of the intermediate axle (43) to ensure that the load (F1) on the kingpin remains at or below the threshold load (F1Max).

3. Method (1000) according to claim 1 or 2 wherein the suspension parameter(s) (k3, k4) are adjusted continuously while the trailer (4) is being loaded.

4. Method (1000) according to claim 1 or 2 wherein the suspension parameter(s) (k3, k4) are adjusted sequentially before loading one or more loads in the trailer (4).

5. Method (1000) according to any of the preceding claims, further comprising calculating (1300) the threshold load (F1Max) based on parameters of a tractor (2) connectable to the trailer (4), the parameters including an admissible load (F21Max, F22Max) on the axles (21, 22) of the tractor (2), the wheelbase (W) of the tractor (2) and the longitudinal position of the fifth wheel (23) of the tractor (2) relative to the axles (21, 22).

6. Method (1000) according to any of the preceding claims, wherein adjusting (1520, 1530) the suspension parameter(s) (k3, k4) includes reducing the load (F3, F4) on the rearmost axle (44) and optionally on the intermediate axle (43) to reduce a virtual wheelbase (L).

7. Method (1000) according to any of the preceding claims, wherein the suspension systems (422, 432, 442) include air bags and the suspension parameter(s) (k3, k4) is/are an air pressure (p3, p4) in the respective air bags.

8. Method (1000) according to any of the preceding claims, wherein the mass of air in each airbag is regulated so as to set the ride height at a predetermined level and/or inclination.

9. Method (1000) according to any of the preceding claims, wherein the trailer (4) comprises load measurement devices (61, 62, 63, 64) configured to assess or calculate the load (F1, F2, F3, F4) on the kingpin (41) and on each of the at least two axles (42, 43, 44), and the trailer (4) further comprises a control unit (70) which automatically performs the adjustment of the suspension parameter(s) (k3, k4) based on the load (F1, F2, F3, F4) measured or calculated by the load measurement devices (61, 62, 63, 64).

10. Method (1000) according to any of the preceding claims, wherein the suspension parameter(s) (k3, k4) is/are adjusted so as to increase the load (F2) on the frontmost axle (42) up to a predetermined threshold (F2Max).

11. Method (1000) according to any of the preceding claims, further comprising:

before or after loading the trailer, connecting (2000) the trailer (4) to a tractor (2), the tractor (2) having at least one driving axle (22);
moving (2100) the tractor (2) and the trailer (4); and
adjusting (2110) suspension parameters to increase the load (F22, F2, F3) on the driving axle(s) (22) of the tractor (2) and/or on a driving axle (42) of the trailer (4), while ensuring that the load (F1) on the kingpin (41) remains equal or less than the threshold load (F1Max).

12. Method (1000) according to any of the preceding claims, further comprising:

before or after loading the trailer, connecting (2000) the trailer to a tractor;
driving (2100) the tractor (2) and the trailer (4); and
adjusting (2120) suspension parameters to reduce a virtual wheelbase (L) when the speed of the tractor (2) and trailer (4) is below a given threshold, while ensuring that the load (F1) on the kingpin (41) remains equal or less than the threshold load (F1Max).

13. Trailer (4) comprising:

a trailer chassis (40);
at least two axles (42, 43, 44) connected to the trailer chassis (40) by independently adjustable suspension systems (422, 432, 442), the at least two axles (42, 43, 44) including a frontmost axle (42) and a rearmost axle (44); and
a kingpin (41) configured to be removably connected to a fifth wheel (23) of a tractor (2);
**characterized in that** the trailer (4) further comprises
a control unit (70) configured to adjust a suspension parameter (k3, k4) of the rearmost axle (44) during loading of the trailer (4) to ensure that the load (F1) on the kingpin (23) remains at or below the threshold load (F1Max).

14. Trailer (4) according to claim 13, further comprising load measurement devices (61, 62, 63, 64) that assess or calculate the load (F1, F2, F3, F4) on the kingpin (41) and on each axle (42, 43, 44) of the trailer (4), the control unit (70) automatically performing the adjustment of the suspension parameter(s) (k3, k4) based on the load (F1, F2, F3, F4) measured or calculated by the load measurement devices (61, 62, 63, 64).

15. Trailer (4) according to claim 13 or 14, wherein at least one of the at least two axles (42, 43, 44) is an electrically driven axle (42), the rearmost axle (44) being preferably idle.

16. Truck assembly (1) including a tractor (2) and a trailer (4) according to any of claims 13 to 15, connected to the tractor (2).

**Fig.1**

**Fig.2**

**Fig.3**

1000

**Fig.4**

Europäisches
Patentamt

European
Patent Office

Office européen
des brevets

# EUROPEAN SEARCH REPORT

Application Number

EP 23 21 0070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2012 015554 A1 (FAHRZEUGBAU KEMPF GMBH [DE]) 13 February 2014 (2014-02-13) | 13-16 | INV.<br>B60G11/27 |
| Y | * abstract *<br>* figure 1 *<br>* paragraphs [0006], [0023] - [0024], [0033], [0043] - [0044] * | 1-12 | B60G17/017<br>B60G17/052 |
| Y | DE 10 2011 118167 A1 (WABCO GMBH [DE]) 16 May 2013 (2013-05-16) | 1-12 | |
| A | * abstract *<br>* claim 1 *<br>* figures 1-3 *<br>* paragraphs [0002], [0003], [0005], [0009], [0037] - [0039] * | 14 | |
| A | DE 197 18 258 A1 (BAER GERD [DE]) 5 November 1998 (1998-11-05) * the whole document * | 1-16 | |
| A | DE 10 2010 037700 A1 (SCHMITZ GOTHA FAHRZEUGWERKE [DE]) 22 March 2012 (2012-03-22) * the whole document * | 1-16 | TECHNICAL FIELDS SEARCHED (IPC)<br><br>B60G |

The present search report has been drawn up for all claims

| Place of search | Date of completion of the search | Examiner |
|---|---|---|
| The Hague | 13 May 2024 | Schmidt, Nico |

EPO FORM 1503 03.82 (P04C01)

**ANNEX TO THE EUROPEAN SEARCH REPORT
ON EUROPEAN PATENT APPLICATION NO.**                    EP 23 21 0070

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2024

| Patent document cited in search report | Publication date | Patent family member(s) | Publication date |
|---|---|---|---|
| DE 102012015554 A1 | 13-02-2014 | NONE | |
| DE 102011118167 A1 | 16-05-2013 | DE 102011118167 A1 | 16-05-2013 |
| | | EP 2591928 A2 | 15-05-2013 |
| | | ES 2536241 T3 | 21-05-2015 |
| | | PL 2591928 T3 | 31-07-2015 |
| | | US 2013119637 A1 | 16-05-2013 |
| DE 19718258 A1 | 05-11-1998 | NONE | |
| DE 102010037700 A1 | 22-03-2012 | NONE | |

EPO FORM P0459

**REFERENCES CITED IN THE DESCRIPTION**

**Patent documents cited in the description**

• US 5025877 A